**Europäisches Patentamt**

**European Patent Office**

**Office européen des brevets**

(19)

(11) Veröffentlichungsnummer: **0 001 268**
**B1**

(12) **EUROPÄISCHE PATENTSCHRIFT**

(45) Veröffentlichungstag der Patentschrift: **20.05.81**

(51) Int. Cl.³: **F 16 D 3/19** //F16D3/10

(21) Anmeldenummer: **78100905.5**

(22) Anmeldetag: **15.09.78**

(54) **Elastische Kupplung.**

(30) Priorität: **21.09.77 DE 2742442**

(43) Veröffentlichungstag der Anmeldung:
**04.04.79 Patentblatt 79/7**

(45) Bekanntmachung des Hinweises auf die Patenterteilung:
**20.05.81 Patentblatt 81/20**

(84) Benannte Vertragsstaaten:
**BE CH FR GB LU NL SE**

(56) Entgegenhaltungen:
**DE - A - 2 135 589**
**DE - A - 2 159 357**
**DE - C - 1 149 204**
**US - A - 4 047 395**

(73) Patentinhaber: **Balcke-Dürr AG**
**Homberger Strasse 2**
**D-4030 Ratingen (DE)**

(72) Erfinder: **Fickelscher, Kurt G.**
**Herderstrasse 19**
**D-6710 Frankenthal (DE)**

(74) Vertreter: **Klose, Hans**
**Kurfürstenstrasse 32**
**D-6700 Ludwigshafen (DE)**

Courier Press, Leamington Spa, England.

## Elastische Kupplung

Die Erfindung betrifft eine elastische Kupplung mit zwei auf Wellenenden angeordneten gleichartigen Zahnrädern, deren Zahnreihen nebeneinander liegen, sowie mit einem beide Zahnräder axial überdeckenden Kupplungszahnkranz, dessen Kupplungszähne die gleiche Winkelteilung haben wie die Zähne der Zahnräder und die in die Zahnlücken der Zahnräder eingriefen.

Bei einer bekannten Kupplung dieser Art sind zwei Zahnräder mit Abstand nebeneinander angeordnet (US—PS 4 047 395). Die Zahnflanken dieser Zahnräder sind

a) im Radialschnitt konvex ausgebildet,

b) im Axialschnitt konvex ausgebildet, d.h. ballig.

In die Zahnlücken beider Zahnräder greift ein die Zahnräder überdeckender Kupplungszahnkranz ein. Dieser besteht aus einem streifenförmigen Blech, das zur Bildung der Kupplungszähne gewellt und zu mehreren Lagen derart aufeinander gewickelt ist, daß sich die einzelnen Lagen jeweils nur im Bereich der Zahnflanken in axial verlaufenden Kontaktlinien berühren. Die Zahnflanken des Kupplungszahnkranzes berühren die zweifach gekrümmten Flanken der Zähne der Zahnräder jeweils nur in einem Punkt. Der äußere Abschluß der bekannten Kupplung bildet eine Hülse, welche den Kupplungskranz umgibt und an der sich die Kupplungszähne in radialer Richtung abstützen.

Während des Betriebs werden die einzelnen Lagen des Bleches, welches den Kupplungszahnkranz bildet, unter der Einwirkung des übertragenden Drehmomentes derart federnd verformt, daß die linienförmige Berührung der einzelnen Lagen untereinander sowie die punktförmige gegenseitige Berührung der Zähne von Kupplungszahnkranz und Zahnrädern in eine Berührung in Kontaktflächen übergeht. Die Elastizität dieser bekannten Kupplung ist daher durch die periphere elastische Verformbarkeit der aufeinander gewickelten Blechlagen des Kupplungszahnkranzes bestimmt.

Die Doppelfunktion des Kupplungskranzes, nämlich Kraftübertragung zwischen den beiden Kupplungshälften und Bewirkung der Drehelastizität, erfordert bei der bekannten Kupplung eine aufwendige und daher teuere Ausbildung des Kupplungszahnkranzes. Darüberhinaus kann in den Zahnlücken der Zahnräder nur ein Kupplungszahnkranz mit einer begrenzten Anzahl von Blechlagen untergebracht werden, so daß die bekannte Kupplung nicht mit beliebiger Drehelastizität oder Drehelastizitäts-Charakteristik hergestellt werden kann.

Der Erfindung liegt die Aufgabe zugrunde, eine Kupplung der eingangs genannten Art anzugeben, die neben den üblicherweise an eine elastische Kupplung zu stellenden Forderungen, wie zum Beispiel Dämpfung von Drehschwingungen und Drehstößen und Ausgleich von Versatz der zu kuppelnden Wellen, hohe Drehmomente bei beliebiger, insbesondere hoher Elastizität mit einfachem und somit kostengünstigem Aufbau übertragen kann. Darüberhinaus soll die Kupplung für möglichst viele Einsatzgebiete einsetzbar sein und in ihrer Elastizität an diese Anwendungsgebiete auf einfache Weise anpaßbar sein.

Die Lösung dieser Aufgabe besteht erfindungsgemäß darin, daß gesonderte federnde Mittel vorgesehen sind, die die Kupplungszähne und/oder die Zähne der Zahnräder radial federnd in die ihnen zugeordneten gegenüberliegenden Zahnlücken der Zahnräder eindrücken, wobei bei Änderung der Belastung die Zahnflanken aneinander gleiten.

Es sind somit keine elastischen Glieder in den Kraftfluß vom Zahn des Zahnrades zum Zahn des Kupplungszahnkranzes zwischengeschaltet, so daß sehr hohe Drehmomente übertragbar sind, deren Größe lediglich von der Scherfestigkeit der Zähne und den Federkräften abhängt.

Die Elastizität der Kupplung wird durch besondere federnde Mittel erreicht, welche bewirken, daß die im Eingriff stehenden Zähne sich an die mit der Verdrehung der Zahnräder sich verändernden, von beiden Zahnrädern gemeinsam gebildeten Zahnlücken, die als virtuelle Zahnlücken bezeichnet werden, anpassen können, wobei diese Anpassung und somit auch Verdrehung der Zahnräder gegen den Widerstand der radial wirkenden Federbeaufschlagung der besonderen Mittel möglich ist. Durch entsprechende Auswahl der Stärke dieses Widerstandes, d.h. der Federbeaufschlagung, kann das Ausmaß der Verdrehung und somit die Drehelastizität der Kupplung festgelegt werden.

Die erfindungsgemäße Kupplung unterscheidet sich in ihrer Wirkungsweise, d.h. in ihrem kinematischen Prinzip, prinzipiell von der bekannten Kupplung dieser Art.

Bei der bekannten Kupplung wird die Elastizität durch periphere Federung des Kupplungszahnkranzes selbst bewirkt, bei der erfindungsgemäßen Kupplung dagegen durch das radial federnde Eindrücken der Zähne in die gegenüberliegenden Zahnlücken erreicht.

Die wesentlichsten Vorteile der erfindungsgemäßen Kupplung sind zusammengefaßt die folgenden:

1. Bei starrer Kupplung (sehr harte Einstellung der besonderen federnden Mittel) läßt sich eine optimale Zentrierung der miteinander zu kuppelnden Wellen erreichen.

2. Bezogen auf den Außendurchmesser können größere Drehmomente übertragen werden als bei bekannten Kupplungen.

3. Die Kupplung kann durch entsprechende Wahl der besonderen federnden Mittel von starr bis hochelastisch ausgeführt werden, ohne daß dabei die Grundelemente, insbesondere die Kupplungszahnkränze, sich wesentlich unterscheiden würden; auch ist es möglich, die Konstruktion derart auszuführen, daß die Elastizität der Kupplung einstellbar ist.

4. Unter Last und auch bei größeren Lastschwankungen bleiben die Zähne der Kupplung ständig in gegebenenfalls gleitendem Kontakt, so daß keine Spaltkorrosion bzw. Funkenbildung auftreten kann. Die Kupplung ist spielfrei.

5. Da die Zahnreihe des Kupplungszahnkranzes nicht unmittelbar mit den Zahnreihen der Zahnräder, sondern mit einer virtuellen Zahnreihe kämmt, wird ein vorhandener Wellenversatz halbiert, d.h. er kommt an den Zähnen nur in halber Höhe zur Auswirkung; die Rückstellkräfte werden entsprechend vermindert.

6. Bei geeigneter Konstruktion des Kupplungszahnkranzes können große Wellenversätze überbrückt werden, wobei dann der Kupplungszahnkranz einerseits mit den Wellen eine Drehbewegung und andererseits überlagerte Radialbewegung durchführt.

7. Die Kupplung ist sehr leicht montierbar und demontierbar.

8. Auch Wellen unterschiedlichen Durchmessers können gut zueinander zentriert werden.

In den meisten Anwendungsfällen greifen die Kupplungszähne von außen in die Zahnlücken der Zahnräder ein. Sollen jedoch hohle Wellen miteinander gekuppelt werden oder sind die Kupplungsnaben hohl ausgeführt, so greifen die Kupplungszähne von innen in die Zahnlücken der Zahnräder ein. In jedem Fall sind zwei "gleichartige" Zahnräder, d.h. zwei außenverzahnte oder zwei innenverzahnte Zahnräder, einander zugeordnet.

Die gesonderten federnden Mittel können auf verschiedene Weise ausgebildet sein. Eine besonders einfache Konstruktion ergibt sich, wenn diese als eine in Umfangsrichtung elastische Hülse ausgebildet sind, an der sich die Kupplungszähne wenigstens in radialer Richtung abstützen.

Eine andere, ebenfalls einfache Ausgestaltung der Erfindung besteht darin, daß die federnden Mittel als elastischer Grundkörper der Zahnräder ausgebildet sind.

Werden die im Kupplungszahnkranz angeordneten Zähne radial federnd in die gegenüberliegenden Zahnlücken eingedrückt, so ergibt sich dann ein besonders gutes Zusammenwirken der Kupplungzähne mit den Zahnlücken der Zahnräder, wenn jeder Kupplungszahn einzeln über eine gesonderte Feder auf der Hülse gelagert ist.

Es sind somit verschiedene Möglichkeiten für die Ausbildung der gesonderten federnden Mittel gezeigt, so daß jeweils die auf den vorliegenden Anwendungsfall passende Ausführungsform gewält werden kann.

Um die Flächenpressung zwischen den Kupplungsflächen gering zu halten, beziehungsweise um bei vorgegebenen Flächen hohe Drehmomente übertragen zu können, weisen vorteilhaft sämtliche Zähne ebene Zahnflanken auf.

Zur Steigerung der übertragbaren Leistung ist es zudem emfehlenswert, daß die radial in die ihnen zugeordneten gegenüberliegenden Zahnlücken gedrückten Kupplungszähne massiv ausgebildet sind. Diese Ausführungsform ist deshalb möglich, weil im Gegensatz zum Stand der Technik die Kupplungszähne nicht mehr die Elastizität der Kupplung bewirken müssen, sondern lediglich zur Kraftübertragung dienen und nur auf Scherung beansprucht sind.

Ist jeder Kupplungszahn über eine gesonderte Feder auf dem Kupplungszahnkranz gelagert, so kann eine Anpassung des Kupplungszahnes an das sich bei Belastungswechsel ändernde Profil der virtuellen Zahnlücken vorteilhaft dadurch auf einfache Weise erreicht werden, daß jeder Kupplungszahn einen in seiner Axialebene bis fast zur Spitze verlaufenden Schlitz aufweist, der sich zum Kupplungskranz hin keilförmig erweitert und mit diesem erweiterten Bereich auf der Feder reitend aufliegt. Hierbei bewährt es sich, die Feder zylindrisch auszubilden und zur Achsrichtung parallel anzuordnen.

Die Anpassung der virtuellen Zahnreihe an den Kupplungszahnkranz läßt sich verbessern und die Drehfederung der Kupplung läßt sich ohne großen Aufwand steigern, wenn vorteilhaft die die Füße der Zähne mindestens eines Zahnrades nur über jeweils einen schmalen nachgiebigen Steg mit dem Grundkörper des Zahnrades in Verbindung stehen.

Um schließlich den Gesamtaufwand für die erfindungsgemäße Kupplung weiter zu verringern, ist es emfehlenswert, in mindestens einer der zu kuppelnden Wellen abgerundete Kerben anzubringen, in welche die nach innen gerichteten Kanten eines Zick-Zack-Bleches eingreifen, welches die Zähne eines Zahnrades bildet.

Bei geringen Belastungen der Kupplung müssen nicht sämtliche Zähne des Kupplungszahnkranzes vorhanden sein; dieser kann daher Fehlstellen aufweisen, die vorzugsweise in regelmäßiger Folge angeordnet sind. Diese Maßnahme wird man ergreifen, wenn eine in diesem Fall an sich mögliche Verkleinerung der Kupplungsabmessungen aus konstruktiven oder sonstigen Gründen nicht durchführbar ist und das Schwungmoment verringert werden soll.

Weitere Vorteile und empfehlenswerte Merkmale der Erfindung gehen aus der folgenden Beschreibung von Ausführungsbeispielen im Zusammenhang mit den schematischen Zeichnungen hervor. Hierbei ziegen:

Fig. 1 einen Axialschnitt durch die untere Hälfte einer Kupplung gemäß der Erfindung,

Fig. 2 einen Querschnitt längs der Schnittlinie II—II durch den Gegenstand der Fig. 1,

Fig. 3, 4 und 5 schematisch die Anordnung eines Kupplungszahnes zwischen benachbarten Zähnen der Zahnräder,

Fig. 6 die Seitenansicht zweier nebeneinander angeordneter Zahnräder,

Fig. 7 eine Seitenansicht einer Kupplung mit geschlitzten Kupplungszähnen,

Fig. 8 die Lagerung und Ausbildung eines geschlitzten Kupplungszahnes auf einer Feder als Ausführungsvariante,

Fig. 9 die Seitenansicht einer Kupplung im Ausschnitt mit peripher schwenkenden und federnden Zähnen der Zahnräder und

Fig. 10 die Seitenansicht einer Kupplung im Ausschnitt, bei der die Zahnreihe eines Zahnrades durch ein Zick-Zack-Blech ersetzt ist.

Gleiche Teile sind in den einzelnen Figuren mit den gleichen Bezugzeichen versehen. Ferner sind in den einzelnen Figuren wiederkehrende Einzelteile nur insoweit mit Bezugzeichen versehen, als dies für das Verständnis erforderlich ist.

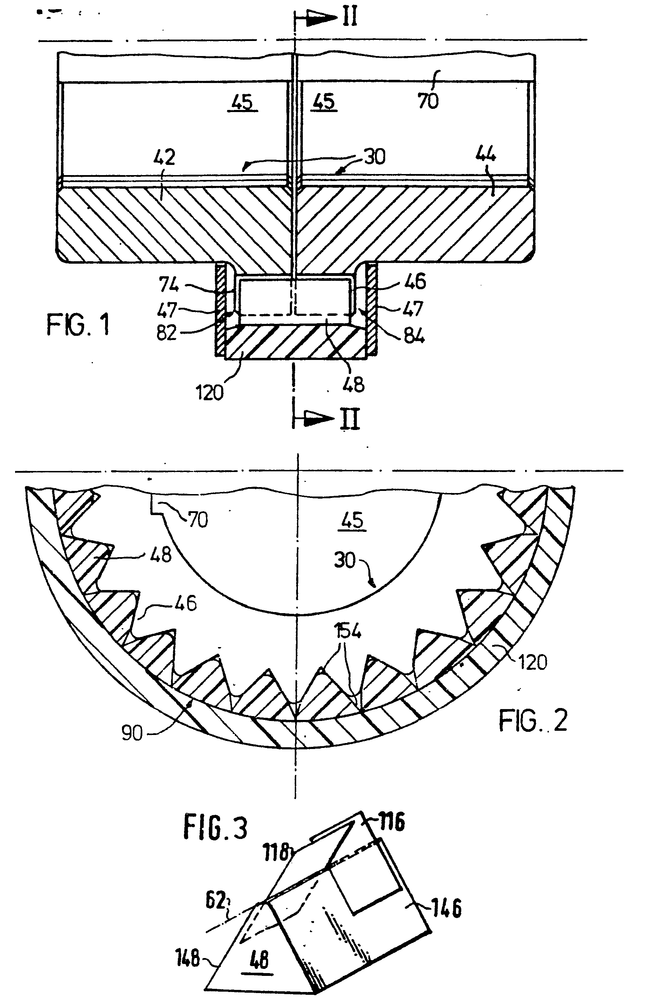

Die Kupplung gemäß den Fig. 1 und 2 besteht im wesentlichen aus einem innenverzahnten Kupplungszahnkranz 90 und zwei außenverzahnten Zahnrädern 82 und 84. Die Zähne 46 und 74 der Zahnräder sind auf zwei Kupplungsnaben 44 und 42 angeordnet, die jeweils den Grundkörper 30 der Zahnräder bilden und die zur drehfesten Befestigung auf nicht dargestellten Wellenenden jeweils mit einer Bohrung 45 sowie mit Paßfedernuten 70 versehen sind. Hierbei ist die Anordnung der beiden Zahnräder 82 und 84 so getroffen, daß diese etwa fluchtend und unmittelbar nebeneinander angeordnet sind.

Die Anzahl und die Form sowie sämtliche eine Verzahnung kennzeichnenden Merkmale der Zähne 46 und 74 der beiden Zahnräder sind identisch ausgeführt. Die Zahnräder sind so nebeneinander angeordnet, daß jeweils ein Kupplungszahn 48 des Kupplungszahnkranzes 90 im Eingriff ist mit den Zähnen 46, 74 der Zahnräder. Hierzu ist es erforderlich, daß die axiale Breite der Kupplungszähne 48 etwa so groß ist, wie gemeinsame axiale Erstreckung der Zähne 46 und 74 der Zahnrader.

Der Aufbau des Kupplungszahnkranzes 90 ist am besten aus dem Querschnitt gemäß Fig. 2 zu erkennen. Danach sind die Kupplungszähne 48 voll ausgebildet und von der Hülse 120 umgeben, die aus einem elastischen Material, wie z.B. Gummi oder Kunststoff, besteht. Eine Befestigung der Kupplungszähne 48 untereinander und eine Befestigung der Kupplungszähne 48 an der elastischen Hülse 120 ist nicht nötig; es genügt, die Zähne einzeln und lose in den Zahnlücken der Zahnräder 82, 84 anzuordnen. Ein radiales Herausfallen der Zähne aus den Zahnlücken ist durch die elastische Hülse 120 verhindert, und wie aus Fig. 1 ersichtlich, verhindern Ringe 47, die seitlich an der Hülse 120 befestigt sind und sich bis etwa zu den Kupplungsnaben 42 und 44 erstrecken, ein seitliches Herausfallen der losen Kupplungszähne 48. Diese Ringe 47 dienen gleichzeitig als Schutz gegen das Eindringen von Schmutz in die Verzahnung und verhindern den Verlust von Schmiermittel, wie z.B. Fett oder Öl, das

gegebenenfalls in die Verzahnung eingebracht ist.

Wie weiter aus den Zeichnungen ersichtlich ist, sind die Zähne jeweils an der Spitze 154 abgerundet und weisen Zahnflanken auf, die eben ausgebildet sind bei dreieckförmigem Zahnprofil.

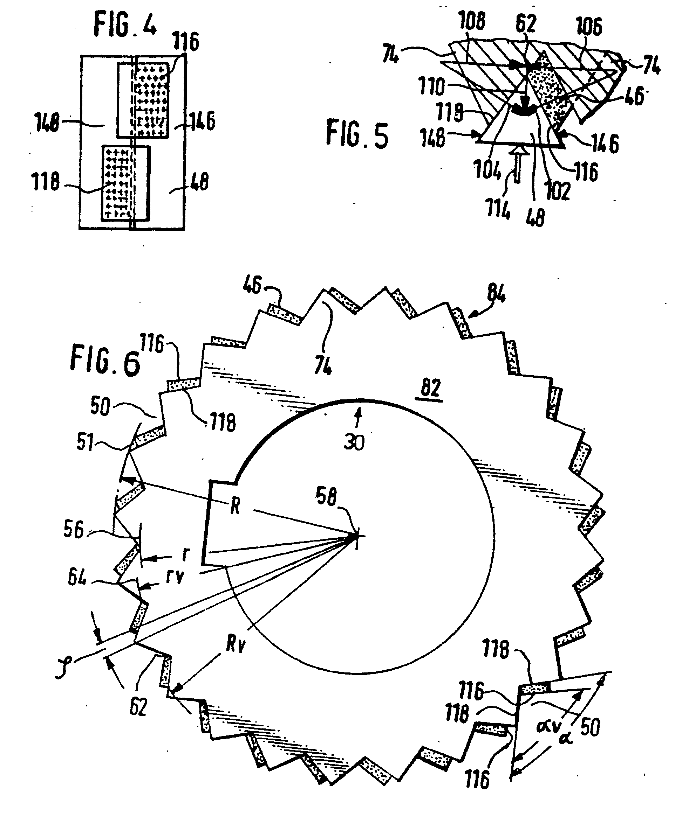

Die Fig. 3 und 4 zeigen einen Kupplungszahn 48 des Kupplungszahnkranzes und sein Zusammenwirken mit den Zähnen 46 und 74 der Zahnräder. Hierbei sind die Zähne 46 und 74 nur durch ihre Zahnflanken 116 und 118 angedeutet. Man erkennt, daß der einen Zahnflanke 146 des Kupplungs-Zahnes 48 die Zahnflanke 116 eines Zahnrad-Zahnes, der anderen Zahnflanke 148 des Kupplungs-Zahnes 48 die Zahnflanke 118 eines anderen Zahnrad-Zahnes anliegt. Die beiden Zahnflanken 116 und 118 bilden miteinander die "virtuelle Zahnlücke", welche vom Kupplungs-Zahn 48 etwa vollständig ausgefüllt wird.

Fig. 4 zeigt den Gegenstand der Fig. 3 in Aufsicht. Die am Kupplungs-Zahn 48 anliegenden Bereiche der Zahnflanken 116 und 118 sind mit Kreuzchen bezeichnet. Sind die Zahnflanken der Kupplungs-Zähne 48 nicht, wie in den Fig. 3 und 4 gezeigt, eben ausgebildet, sondern gekrümmt ausgeführt, so erfolgt selbstverständlich keine flächenhafte Berührung zwischen den Kupplungs-Zähnen 48 des Kupplungszahnkranzes und den Zähnen 46 und 74 der Zahnräder. In diesem Falle ist die Berührung linienförmig.

Wird während des Betriebs der Kupplung ein Drehmoment zwischen den beiden Kupplungsnaben 42 und 44 übertragen, so werden die Kupplungs-Zähne 48 infolge ihrer elastischen Lagerung auf den gesonderten federnden Mitteln radial nach außen gedrückt. Die Folgt dieser elastischen Bewegungsmöglichkeit der Zähne ist, daß sich die beiden Kupplungsnaben 42 und 44 um einen Verdrehwinkel $\phi$ gegeneinander verdrehen. Dieser Fall ist in Fig. 6 dargestellt.

Fig. 6 zeigt die Seitenansicht auf zwei nebeneinander angeordnete Zahnräder, wie z.B. die Ansicht des Gegenstandes der Fig. 1 von links im kleineren Maßstab, jedoch ohne den Kupplungszahnkranz 90 und ohne den Ring 47, wobei die sichtbaren Teile der Zähne 46 punktiert sind.

Die beiden hintereinander liegenden Zahnräder 82 und 84 sind um einen Verdrehwinkel $\phi$ gegeneinander verdreht. Die Zahnflanken 116 und 118 der Zähne der beiden Zahnräder bilden miteinander zwei Reihen von virtuellen Zahnlücken 50 und 51. Die Flanken der größeren virtuellen Zahnlücke 50 schneiden sich einmal in einer Linie 62, die als virtuelle Zahnlückenspitze 62 erkennbar ist. Alle diese virtuellen Zahnlückenspitzen 62 liegen auf qem "virtuellen Fußkreis" 64, der den Radius rv aufweist.

Daneben entsteht noch eine Reihe von kleineren virtuellen Zahnlücken 51, deren Spitzen auf dem Radius Rv liegen. Die radiale Teife der Zahnlücken 51 ist jedoch erheblich geringer als die radiale Teife der Zahnlücken 50, so daß praktisch von den beiden entstehenden Zahnlücken 50 und 51 nur die Reihe von virtuellen Zahnlücken 50 mit dem Fußkreis rv genutzt wird, welche die größere radiale Tiefe aufweisen.

Fig. 5 zeigt das Zusammenarbeiten der Kupplungs-Zähne 48 mit den virtuellen Zahnlücken 50 der Zähne 46 und 74 der Zahnräder. Hierzu zeigt diese Figur einen Ausschnitt aus der unteren Hälfte der Fig. 6 in größerem Maßstab, wobei zusätzlich ein einziger Kupplungs-Zahn 48 und die mit diesem zusammenarbeitenden Zähne 46, 74 der Zahnräder dargestellt sind.

Da die Zahnräder gegeneinander verdreht sind, bildet die Zahnflanke 118 des vorderen Zahnrades 74 zusammen mit der Zahnflanke 116 des hinteren Zahnrades 46 eine virtuelle Zahnlücke, die vom Kupplungs-Zahn 48 ausgefüllt ist. Die Zahnflanke 148 des Kupplungs-Zahn 48 liegt daher an der Zahnflanke 118 des vorderen Zahnes 74 an, wogegen die Zahnflanke 146 des Kupplungs-Zahnes 48 an der Zahnflanke 116 des hinteren Zahnes 46 anliegt. Im vorliegenden Beispiel weist die Spitze des Kupplungs-Zahnes 48 keine Abrundung auf, so daß sich die virtuelle Zahnlückenspitze 62 mit der Spitze des Kupplungszahnes 48 deckt. Wäre die Spitze des Kupplungszahnes 48 in üblicher Weise abgerundet, so träfe das nicht zu.

Die Zähne 46 und 74 wirken auf den Kupplungs-Zahn 48 mit den durch die Pfeile 102 und 104 angedeuteten Kräften. Diese Kräfte sind in die tangentialen Komponenten 106 und 108 einerseits und in die radiale Komponente 110 andererseits zerlegt. Man erkennt, daß die tangentialen Komponenten 106 und 108 sich aufheben, was zur Folge hat, daß auf den Kupplungs-Zahn 48 keine Kräfte in Umfangsrichtung wirken. Dies ist der Grund, warum die Kupplungs-Zähne 48 auf der Hülse 120 nicht befestigt zu sein brauchen. Auch had dies zur Folge, daß der Kupplungszahnkranz 90 in Umfangsrichtung keine Kräfte zu übertragen braucht und daher erforderlichenfalls dünn und elastisch ausgebildet sein kann, ohne daß dadurch die Lebensdauer und die Leistungsfähigkeit der Kupplung, höchste Drehmomente zu übertragen, beeinträchtigt würde. Auf den Kupplungs-Zahn 48 wirkt nur die radiale Kraftkomponente 110, welche diesen Zahn auf die Hülse 120 drückt.

Die in Fig. 5 nicht dargestellte Hülse 120 ist elastisch und drückt die Kupplungs-Zähne 48 in Richtung des Pfeiles 114 in die virtuelle Zahnlücke. Mit zunehmendem Verdrehwinkel $\phi$ bewegt sich die Schnittlinie 62 stetig nach außen. Der Fußkreisradius Rv der virtuellen Zahnlücke wird größer. Gegen die federnde Kraft der Hülse 120 werden die Kupplungs-Zähne 48 nach außen geschoben, wobei die Zahnflanken aufeinander gleiten. Die Hülse 120 bildet somit eine Ausführungsform der gesonderten federnden Mittel.

Verbinden den beiden Kupplungshälften eine Kraftmaschine und eine Arbeitsmaschine, so muß beim Anfahren der Kraftmaschine zunächst ein sehr hohes Drehmoment übertragen werden, um die Arbeitsmaschine zu beschleunigen. Wenn die Federkraft der Hülse 120 entsprechend weich eingestellt ist, so werden die Kupplungs-Zähne 48 weit nach außen gedrückt und dies hat zunächst einen relativ großen Verdrehwinkel $\phi$ der Zahnräder zur Folge. Die Federkraft der Hülse 120 trachtet jedoch danach, die Kupplungs-Zähne 48 wieder hineinzudrücken und somit den Verdrehwinkel zu vermindern. Im stationären Betriebszustand wird der Verdrehwinkel $\phi$ dann wieder Null oder fast Null.

Stellt man die Federkraft der Hülse 120 entsprechend weich ein, so können die Kupplungs-Zähne 48 so weit nach außen gedrückt werden, daß jeder Kupplungs-Zahn 48 bei einem vorgegebenen Drehmoment in die nächste virtuelle Zahnlücke überspringt. Durch diese Überspringen der Zähne ist das zu übertragende Drehmoment der Kupplung begrenzt; die Kupplung wirkt somit als Sicherheitskupplung.

Wie aus den vorstehenden Ausführungen hervorgeht, wird die Elastizität der erfindungsgemäßen Kupplung durch die radiale beweglichkeit der Zähne des Kupplungszahnkranzes bewirkt, wobei die Größe dieser Beweglichkeit durch die Elastizität der Hülse bestimmt wird. Durch diese Elastizität wird eine Dämpfung von gegebenenfalls auftretenden Drehschwingungen oder Drehstößen erreicht. Die Dämpfungscharakteristik ist in diesem Falle abhängig von der Zähnezahl der Zahnräder sowie vom Flankenwinkel der Zähne der Zahnräder. Hierbei gilt, daß die Dämpfung mit der Anzahl der Zähne ansteigt. Ebenso steigt die Dämpfung an mit kleiner werdendem Flankenwinkel der Zähne der Zahnräder.

Auch kann jeweils der Grundkörper 30 der Zahnräder 82, 84 wenigstens im Bereich der Zähne 46, 74 nach dem Vorbild der Hülse 120 elastisch ausgeführt sein und eine andere Ausführungsform der gesonderten federnden Mittel bilden. In diesem Fall könnten die Zähne 46, 74 bei einer Verdrehung der Zahnräder 82, 84 radial nach innen ausweichen gegen den federnden Widerstand des Grundkörpers, der jetzt die Elastizität bestimmt oder mitbestimmt, falls die Hülse 120 ebenfalls federnd ist.

Wie aus Fig. 6 ersichtlich bilden die Zahnflanken 118 miteinander den Winkel $\alpha$. Ebenso bilden die Zahnflanken 116 miteinander den gleichen Winkel $\alpha$. Die virtuelle Zahnlücke 50 jedoch ist einerseits von einer Zahnflanke 118 und andererseits von einer Zahnflanke 116 begrenzt. Diese Zahnflanken 118 und 116 bilden miteinander einen kleineren Winkel $\alpha v$ stimmt mit $\alpha$ überein, wenn der Verdrehwinkel $\phi$ der Zahnräder gleich Null ist. Mit zunehmendem

Verdrehwinkel $\phi$ nimmt der Wert von $\alpha_v$ ab, d.h. die virtuelle Zahnlücke 50 wird zunehmend spitzer. Um ein flächiges Anliegen der in Fig. 6 nicht eingezeichneten Kupplungs-Zähne zu gewährleisten, ist vorteilhaft daher der Flankenwinkel jedes Kupplungs-Zahnes veränderlich.

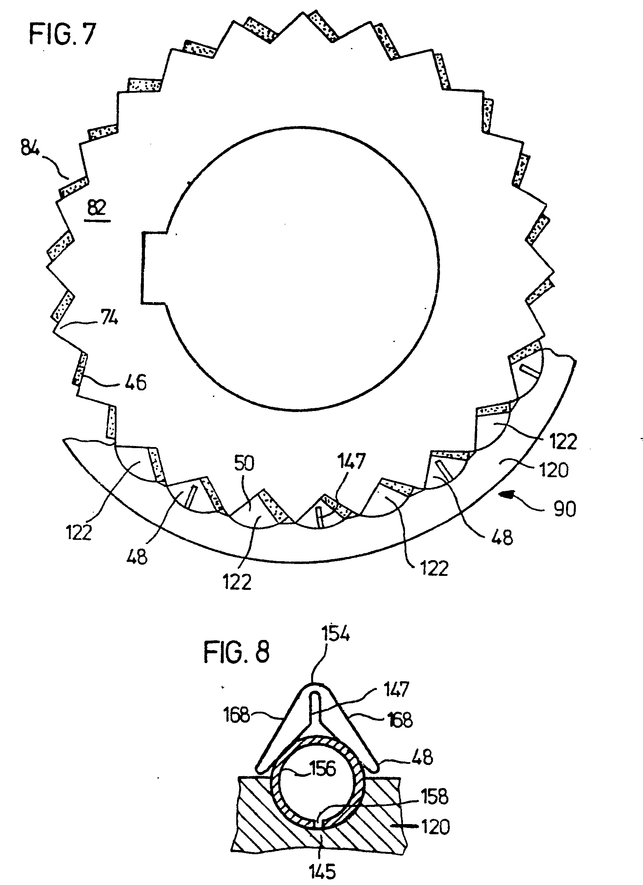

Mit einer Konstruktion einer Kupplung gemäß Fig. 7 lassen sich die vorgenannten Veränderungen des Flankenwinkels $\alpha v$ der virtuellen Zahnlücke 50 kompensieren. In dieser Figur, die eine Seitenansicht einer Kupplung mit nur teilweise dargestelltem Kupplungszahnkranz 90 zeigt, sind Kupplungs-Zähne 48, die in ihrem Flankenwinkel veränderlich sind, dargestellt. Diese weisen jeweils einen von Zahnfuß bis in die Nähe der Zahnspitze verlaufenden Schlitz 147 auf. Die beiden Flankenteile jedes Zahnes sind daher jeweils nur im Bereich der Zahnspitze verbunden, so daß der Flankenwinkel federnd veränderlicht ist.

Außerdem sind noch Fehlstellen 122 in regelmäßiger Folge vorhanden, an denen keine Kupplungs-Zähne 48 vorhanden sind. Solche Fehlstellen sind bei geringer Belastung der Kupplung dann von Vorteil, wenn eine Verkleinerung der Kupplung, die in diesem Falle möglich wäre, z.B. aus konstruktiven oder baulichen Gründen, ausscheidet.

Der im Kupplungs-Zahn 48 im Bereich der Zahnhalbierenden 155 verlaufende Schlitz 147, der vom Zahnfuß 152 bis fast zur Spitze 154 reicht, gestattet eine Änderung des Flankenwinkels ohne Schwierigkeit. Ferner läßt sich durch geeignete Wahl der zur Verfügung stehenden Parameter eine gewünschte Charakteristik der Dämpfung von Drehschwingungen erreichen.

Fig. 8 zeigt ein Ausführungsvariante bezüglich der Lagerung eines Kupplungs-Zahnes 48 und der Ausbildung des Schlitzes 147. Danach weist die Hülse 120 eine halbzylindrische Ausnehmung 145 auf. In diese ist eine zylindrische Feder 156 eingesetzt, welche an der Stelle 158, die radial nach außen zeigt, offen ist. Auf der Feder 156 sitzt der Kupplungszahn 48 mit seinen beiden Flankenteilen 168, die den sich nach unten erweiternden Schlitz 147 begrenzen und die oben miteinander verbunden (vorteilhaft einteilig ausgebildet) sind. Die Flankenteile 168 des Kupplungs-Zahnes 48 der Fig. 8 enden mit Abstand zur Hülse 120, so daß der Kupplungs-Zahn 48 auf der Feder 156 reitet. Eine Anpassung an die Veränderung des Flankenwinkels ist damit möglich. Gleichzeitig wird durch die Feder eine elastische Federbeaufschlagung der Kupplungs-Zähne in Richtung auf die virtuellen Zahnlücken desZentralrades erreicht, so daß eine weitere Ausführungsform der gesonderten federnden Mittel gegeben ist.

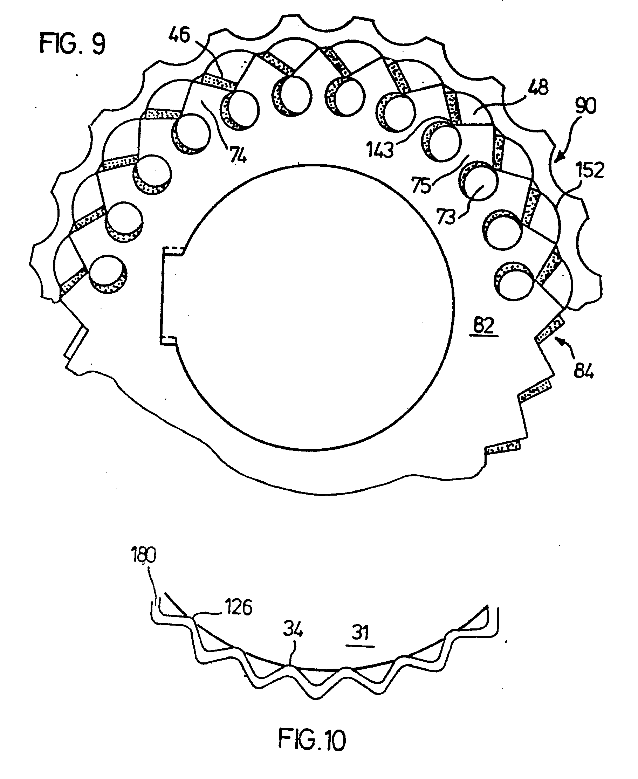

Fig. 9 zeigt eine Kupplung in Seitenansicht mit der Möglichkeit, die Drehfederung der Kupplung zu steigern. In den Körper der Zahnräder sind axiale Bohrungen 73 eingebracht, welche zu den Zahlücken zwischen je zwei Zähnen 46 bzw. 74 hin bei 143 öffen sind, z.B. durch einen Spalt. Mit dem Körper der Zahnräder stehen die Zähne 46 und 74 somit nur noch über schmale Stege 75 in Verbindung. Diese Stege können während des Betriebs etwas in peripherer Richtung federn, so daß die Drehelastizität erhöht ist.

Fig. 10 zeigt einen Querschnitt durch eine Kupplung im Bereich eines Zahnrades, wobei nur der untere Teil dargestellt ist. Wie aus der Zeichnung ersichtlich, weisen die Zahnräder keine Kupplungsnaben auf, sondern in die zu kupelnden Wellen 31 sind axial verlaufende, abgerundete Kerben 126 angebracht, in welche die nach innen gerichteten Kanten 34 eines Zick-Zack-Bleches 180, welches jeweils das Zahnrad bildet, eingreifen. Diese Kerben 126 müssen hinreichend tief sein, damit bei den auftretenden Drehmomenten das Zick-Zack-Blech 180 nicht aus den Kerben 126 herausgerissen weird. Läßt man hingegen ein Heraustreten des Zick-Zack-Bleches 180 aus den Kerben 126 bei einer bestimmten Belastung zu, z.B. durch eine entsprechende Tiefe der Kerben 126, so kann auf diese Weise eine Sicherheitsrutschkupplung gebildet werden, welche die beiden gekuppelten Wellen beim Erreichen eines bestimmten Drehmomentes trennt.

Die Konstruktion gemäß Fig. 10 hat den Vorteil, daß der Gestamtaufwand für die erfindungsgemäße Kupplung wesentlich verringert ist.

Während in den Ausführungsbeispielen gemäß Fig. 1 bis 10 die Zahnräder außenverzahnt sind und oder Kupplungszahnkranz innenverzahnt ist, besteht auch die Möglichkeit der kinematischen Umkehr. In diesem Fall ist der Kupplungszahnkranz innerhalb der Zahnräder angeordnet und seine Zähne stützen sich an einer innenliegenden Hülse ab, so daß die Kupplungs-Zähne von innen in die innenverzahnten Zahnräder eingreifen.

Selbsverständlich sind auch bei dieser Kupplung sämtliche Ausführungsvarianten, die im Zusammenhang mit den Fig. 1 bis 10 erläutert wurden, entsprechend anwendbar.

Bezugszeichenliste

| | |
|---|---|
| 30 | Grundkörper |
| 31 | Welle |
| 34 | innere Kanten (von 180) |
| 42 | Kupplungsnabe |
| 44 | Kupplungsnabe |
| 45 | Bohrung |
| 46 | Zahn des Zahnrades 84 |
| 47 | Ring |
| 48 | Kupplungs-Zahn |
| 50 | virtuelle Zahnlücke |
| 51 | virtuelle Zahnlücke |
| 52 | Zahnlückenspitze (von 84) |
| 54 | Zahnlückenspitze (von 82) |
| 56 | Fußkreis von 84, 82 mit Radius r |
| 58 | Mittelpunkt (von 56 und 64) |
| 60 | Bohrung |

Bezugzeichenliste

| | |
|---|---|
| 62 | Zahnlückenspitze der virtuellen Zahnreihe; Linie |
| 64 | Virtueller Fußkreis mit Radius rv |
| 70 | Paßfedernut |
| 73 | Bohrungen |
| 74 | Zahn des Zahnrades 82 |
| 75 | (schmaler) Steg |
| 82 | Zahnrad |
| 84 | Zahnrad |
| 90 | Kupplungszahnkranz |
| 102 | Pfeil |
| 104 | Pfeil |
| 106 | tangentiale Komponente |
| 108 | tangentiale Komponente |
| 110 | radiale Komponente |
| 114 | Pfeil |
| 116 | Zahnflanke (von 46) |
| 118 | Zahnflanke (von 74) |
| 120 | Hülse |
| 122 | Fehlstelle |
| 126 | Kerbe |
| 143 | Stelle |
| 145 | Ausnehmung |
| 146 | Zahnflanke des Kupplungs-Zahnes |
| 147 | Schlitz |
| 148 | Zahnflanke des Kupplungszahnes |
| 150 | Doppelpfeil |
| 152 | Zahnfuß |
| 154 | Spitz |
| 156 | (zylindrische Feder) |
| 158 | Stelle |
| 168 | Flankenteil |
| 180 | Zick-Zack-Blech |
| r | Fußkreisradius der Zahnräder |
| rv | Fußkreisradius der inneren virtuellen Zahnreihe bzw. Zahnlückenreihe |
| R | Außenradius der Zahnräder |
| Rv | Fußkreisradius der äußeren virtuellen Zahnreihe bzw. Zahnlückenreihe |
| $\alpha$ | Flankenwinkel von 84, 82 |
| $\alpha_v$ | Flankenwinkel der virtuellen Zahnreihe bzw. Zahnlückenreihe |
| $\phi$ | Verdrehwinkel |

**Patentansprüche**

1. Elastische Kupplung mit zwei auf Wellenenden angeordneten gleichartigen Zahnrädern (84, 82) deren Zahnreihen nebeneinander liegen, sowie mit einem beide Zahnräder (84, 82) axial überdeckenden Kupplungszahnkranz (90), dessen Kupplungszähne (48) die gleiche Winkelteilung haben wie die Zähne der Zahnräder (84, 82) und die in die Zahnlücken der Zahnräder eingreifen, dadurch gekennzeichnet, daß gesonderte federnde Mittel (120, 30, 156) vorgesehen sind, die die Kupplungszähne (48) und/oder die Zähne (46, 74) der Zahnräder (84, 82) radial federnd in die ihnen zugeordneten gegenüberliegenden Zahnlücken eindrücken, wobei bei Änderung der Belastung die Zahnflanken (116, 118, 146, 148) aneinander gleiten.

2. Kupplung nach Anspruch 1, dadurch gekennzeichnet, daß die Kupplungszähne (48) von außen in die Zahnlücken der Zahnräder (82, 84) eingreifen.

3. Kupplung nach Anspruch 1, dadurch gekennzeichnet, daß die Kupplungszähne von innen in die Zahnlücken der Zahnräder eingreifen.

4. Kupplung nach Anspruch 1, 2 oder 3, dadurch gekennzeichnet, daß die federnden Mittel als eine in Umfangsrichtung elastische Hülse (120) ausgebildet sind, in der sich die Kupplungszähne (48) abstützen (Fig. 2).

5. Kupplung nach Anspruch 1, 2 oder 3, dadurch gekennzeichnet, daß die federnden Mittel als elastischer Grundkörper (30) der Zahnräder (84, 82) ausgebildet sind.

6. Kupplung nach Anspruch 1, wobei die im Kupplungszahnkranz (90) angeordneten Zähne radial federnd eingedrückt sind, dadurch gekennzeichnet, daß jeder Kupplungszahn (48) einzeln über eine gesonderte Feder (156) auf einer Hülse gelagert ist. (Fig. 8).

7. Kupplung nach einem der Ansprüche 1 bis 6, dadurch gekennzeichnet, daß sämtliche Zähne (46, 74, 48) ebene Zahnflanken aufweisen.

8. Kupplung nach Anspruch 6, dadurch gekennzeichnet, daß die radial in die ihnen zugeordneten gegenüberliegenden Zahnlücken gedrückten Kupplungszähne (48) massiv ausgebildet sind.

9. Kupplung nach Anspruch 7 oder 8, dadurch gekennzeichnet, daß jeder Kupplungszahn (48) einen in seiner Axialebene bis fast zur Spitze (154) verlaufenden Schlitz (147) aufweist, der sich zum Kupplungszahnkranz hin keilförmig erweitert und mit diesem erweiterten Bereich auf der Feder (156) reitent aufliegt (Fig. 7 und 8).

10. Kupplung nach Anspruch 9, dadurch gekennzeichnet, daß die Feder (156) zylindrisch ausgebildet und zur Achsrichtung parallel angeordnet ist.

11. Kupplung nach einem der Ansprüche 1 bis 8, dadurch gekennzeichnet, daß die Füße der Zähne (46, 74) mindestens eines Zahnrades (82, 84) nur über jeweils einen schmalen, nachgiebigen Steg (75) mit dem Grundkörper (30) des Zahnrades in Verbindung stehen (Fig. 9).

12. Kupplung nach einem der Ansprüche 1 bis 11, dadurch gekennzeichnet, daß, soweit sie nicht die federnd angedrichten Zahne anweissen, in mindestens einer der zu kuppelnden Wellen (31) abgerundete Kerben (126) angebracht sind, in welche die nach innen gerichteten Kanten (34) eines Zich-Zack-Bleches (180) eingreifen, welches die Zähne eines Zahnrades bildet (Fig. 10).

13. Kupplung nach einem der Ansprüche 1 bis 12, dadurch gekennzeichnet, daß die Zahnreihe des Kupplungszahnkranzes (90) Fehlstellen (122) aufweist (Fig. 7).

14. Kupplung nach Anspruch 13, dadurch gekennzeichnet, daß die Fehlstellen (122) in regelmäßiger Folge angeordnet sind.

**Revendications**

1. Accouplement élastique avec des roues dentées similaires (84, 82) disposées sur des extrémités d'arbre, dont les rangées de dents sont disposées côté à côte, ainsi qu'avec und couronne dentée d'accouplement (90) recouvrant axialement les deux roues dentées (84, 82) dont les dents d'accouplement (48) présentent le même pas angulaire que les dents des roues dentées (84, 82) et qui s'engagent dans les entre-dents des roues dentées, caractérisé en ce qu'on prévoit des moyens élastiques particuliers (120, 30, 156) qui pressent les dents d'accouplement (48) et/ou les dents (46, 74), des roues dentées (84, 82) radialement et élastiquement dans le entre-dents opposés correspondants, les flancs de dents (116, 118, 146, 148) glissant l'un sur l'autre en cas de modification de charge.

2. Accouplement suivant la revendication 1, caractérisé en ce que les dents d'accouplement (48) s'engagent de l'extérieur dans les entre-dents des roues dentées (82, 84).

3. Accouplement suivant la revendication 1, caractérisé en ce que les dents d'accouplement s'engagent de l'intérieur dans les entre-dents des roues dentées.

4. Accouplement suivant les revendications 1, 2 ou 3, caractérisé en ce que les moyens élastiques sont réalisés sous forme d'une douille ou d'un manchon (120) élastique en direction circonférentielle, sur lequel prennent appui les dents d'accouplement (48).

5. Accouplement suivant les revendications 1, 2 ou 3, caractérisé en ce que les moyens élastiques sont réalisés sous forme de corps de base élastique (30) des roues dentées (84, 82).

6. Accouplement suivant la revendication 1, dans lequel les dents disposées sur la couronne dentée d'accouplement (90) sont engagées par une action radiale élastique, caractérisé en ce qui chaque dent d'accouplement (48) est supportée individuellement par l'intermédiaire d'un ressort particulier (156) sur une douille.

7. Accouplement suivant l'une des revendications 1 à 6, caractérisé en ce que toutes les dents (46, 74, 48) comportent des flancs plans.

8. Accouplement suivant la revendication 6, caractérisé en ce que les dents d'accouplement (48) pressées radialement dans les entre-dents opposés correspondants, sont réalisées de manière massive.

9. Accouplement suivant la revendication 7 ou 8, caractérisé en ce que chaque dent d'accouplement (48) comporte une fente (147) disposée dans son plan axial et allant presque jusqu'au sommet (154), qui s'élargit en forme de coing vers la couronne dentée d'accouplement et qui chevauche avec cette partie élargie le ressort (156).

10. Accouplement suivant la revendication 9, caractérisé en ce que le ressort (156) est réalisé cylindriquement etest disposé parallèlement à la direction axiale.

11. Accouplement suivant l'une des revendications 1 à 8, caractérisé en ce que les bases des dents (46, 74) d'au moins une roue dentée (82, 84) ne sont reliées au corps de base (30) de la roue dentée que par une entretoise étroite, élastique (75).

12. Accouplement suivant l'une des revendications 1 à 11, caractérisé en ce que dans au moins l'un des arbres 31 à accoupler sont réalisées des entailles arrondies (126) dans lesquelles s'engagent les bords 34 dirigés vers l'intérieur d'une tôle en zig-zag 180, qui forment les dents d'une roue dentée, ceci dans la mesure ou les dents appliquées par pression élastique ne comportent pas ces entailles.

13. Accouplement suivant l'une des revendications 1 à 12, caractérisé en ce que la rangée de dents de la couronne dentée d'accouplement (90) comporte des emplacements vides (122).

14. Accouplement selon la revendication 13, caractérisé en ce que les emplacements vides (122) sont disposés suivant une succession régulière.

**Claims**

1. Resilient coupling, with two identical toothed wheels 84, 82, which are arranged on shaft ends and whose rows of teeth lie in side by side juxtaposition, also with a ring gear (internally toothed ring), which axially overlaps both toothed wheels 84, 82 and whose coupling teeth 48 have the same angular spacing as the teeth of the toothed wheels 84, 82 and engage in the tooth gaps of the toothed wheels, characterised in that there is provided separate resilient means 120, 30, 156, which radially resiliently press the coupling teeth 48 and/or the teeth 46, 74 of the toothed wheels 84, 82 into the opposite lying toothed gaps associated with them, the tooth flanks 116, 118, 146, 148 sliding on one another when the load alters.

2. Coupling according to claim 1, characterised in that the coupling teeth 48 engage inwardly in the tooth gaps of the toothed wheels 82, 84.

3. Coupling according to claim 1, characterised in that the coupling teeth engage upwardly into the tooth gaps of the toothed wheels.

4. Coupling according to claim 1, 2 or 3, characterised in that the resilient means are constituted as a sleeve 120 which is resilient in the circumferential direction, the coupling teeth 48 being supported from the sleeve 120 (Figure 2).

5. Coupling according to claim 1, 2 or 3, characterised in that the resilient means are constituted as a resilient main body 30 of the toothed wheels 84, 82.

6. Coupling according to claim 1, in which the teeth arranged in the internally toothed coupling ring 90 are radially inwardly pressed, characterised in that each coupling tooth 48 is individually mounted, with the interposition of a separate spring 156, on a sleeve (Figure 8).

7. Coupling according to one of claims 1 to 6, characterised in that all the teeth 46, 74, 78 have plane tooth flanks.

8. Coupling according to claim 6, characterised in that the coupling teeth 48 which are pressed into the opposite lying tooth gaps associated with them are of solid (i.e. non-hollow) construction.

9. Coupling according to claim 7 or claim 8, characterised in that each coupling tooth 48 has a slot 147 which extends, in the axial plane of the tooth, almost as far as the tip 154; and this slot 147 widens, in wedge-like formation, as far as the ring gear (internally toothed ring), and lies, with this widened area, on the spring 156, in such a way that it can "ride" on the spring 156 (Figures 7 and 8).

10. Coupling according to claim 9, characterised in that the spring 156 is cylindrical and lies parallel to the axial direction.

11. Coupling according to one of claims 1 to 8, characterised in that the roots of the teeth of the wheels 46, 74 of at least one toothed wheel 82, 84 is only connected to the main body 30 of the toothed wheel by way of a narrow, resilient strip 75 (Figure 9).

12. Coupling according to one of claims 1 to 11, characterised in that, insofar as they do not comprise the teeth which are urged resiliently forwards, in at least one of the shafts 31 to be coupled together there is provided rounded notches 126, in which engage the inwardly directed edges 34 of a zig-zag shaped sheet metal member 180, which forms the teeth of a toothed wheel (Figure 10).

13. Coupling according to one of claims 1 to 12, characterised in that the row of teeth of the internally toothed coupling ring 90 has blank positions 122, that is to say positions without gear teeth (Figure 7).

14. Coupling according to claim 13, characterised in that the toothless or blank positions 122 are given a regular order of sequence.

II

45  45  70

42  30  44

74  46
47  47
82  84

FIG. 1

120  48

II

70

48  45

30

46

154

120

90

FIG. 2

FIG. 3

116

118

146

62

148  48

1

**FIG.4**

**FIG.5**

**FIG.6**

FIG. 7

84

82

74

46

50    147

122

122

122

48

120

90

48

FIG. 8

154

168    147    168

48

156

158

120

145

FIG. 9

46
48
90
74
143
75
152
73
82
84

180
126
34
31

FIG.10